# EUROPEAN PATENT SPECIFICATION

(11) **EP 3 311 714 B1**
(45) Date of publication and mention of the grant of the patent: **28.08.2019**
(21) Application number: 17187817.6
(22) Date of filing: 24.08.2017
(51) Int. Cl.: A47J 37/12, H05B 6/12

(54) **INDUCTION HEATING FRYER**
FRITTEUSE MIT INDUKTIONSHEIZUNG
FRITEUSE À CHAUFFAGE PAR INDUCTION

(30) Priority: 24.10.2016 KR 20160138471
(43) Date of publication of application: 25.04.2018
(73) Proprietor: Bumil Industrial Co. Ltd., Incheon 212628 (KR)
(72) Inventor: SHIN, Young Suk, 21665 Incheon (KR)
(74) Representative: Rüger Abel

(56) References cited:
- KR-A- 20160 002 502
- KR-B1- 101 522 812
- KR-B1- 101 652 023
- KR-B1- 101 664 344

## Description

### TECHNICAL FIELD

The present invention relates to an induction (electromagnetic induction) heating fryer, and more particularly, to an induction heating fryer that is configured to have a feed pipe mounted on a discharge pipe disposed on the inner bottom of a frying container to feed frying oil to the interior of the frying container.

### BACKGROUND ART

Generally, a conventional electromagnetic induction heating fryer is disclosed in Korean Patent Publication No.1998-0015002 (hereinafter, referred to as prior art 1). FIG.1 is a schematic view showing the conventional electromagnetic induction heating fryer as disclosed in prior art 1, and as shown, the electromagnetic induction heating fryer includes electromagnetic induction heating means A having a heat source disposed thereon to generate heat therefrom and frying means B for frying food through the heat source of the electromagnetic induction heating means A.

The frying means B includes a case 1 for forming the outer shape thereof, a frying container 2 disposed inside the case 1 and having a given amount of frying oil filled therein, a net-shaped frying basket 3 mounted inside the frying container 2 to place the food to be fried therein, and a cover 4 disposed on the case 1 to cover the frying container 2.

The electromagnetic induction heating means A includes a case 5, an upper ceramic plate 6 mounted on the inner top surface of the case 5, a magnetic force line generating coil 7 disposed under the upper ceramic plate 6, a power supplier 8 for supplying electric current to the magnetic force line generating coil 7, a temperature sensor 9 disposed to come into contact with the upper ceramic plate 6 to sense a temperature of the upper ceramic plate 6, a microcomputer 10 for adjusting the supply of the electric current of the power supplier 8 according to the sensed result of the temperature sensor 9, and a cooling fan 11 for cooling the internal temperature of the case 5.

Under the above-mentioned configuration, the frying means B is placed on the electromagnetic induction heating means A to locate the frying container 2 on top of the upper ceramic plate 6, and next, frying oil like cooking oil is poured into the frying container 2. After that, if a high frequency current is supplied to the magnetic force line generating coil 7 from the power supplier 8, a magnetic force line is generated from the magnetic force line generating coil 7 and then passes through the upper ceramic plate 6 and the underside of the frying container 2, so that eddy current is induced to the interior of the frying container 2 to generate heat, and accordingly, the frying oil filled in the frying container 2 is heated by the generated heat. If the frying oil is heated to a given temperature, the cover 4 is open to put the food to be fried into the frying basket 3, and accordingly, the food is fried by the heated frying oil. A temperature of the frying oil is maintained at a given set temperature through the sensing of the temperature sensor 9 and the adjustment of the electric current supplied to the magnetic force line generating coil 7 under the control of the microcomputer 10.

However, the magnetic force line generating coil 7 is located under the frying basket 3, so that when the frying oil is heated, the magnetic force line is not distributed evenly into the frying container 2, thereby undesirably causing the frying container 2 to have different internal temperatures.

As the frying container 2 has different internal temperatures, further, the food is not uniformly fried.

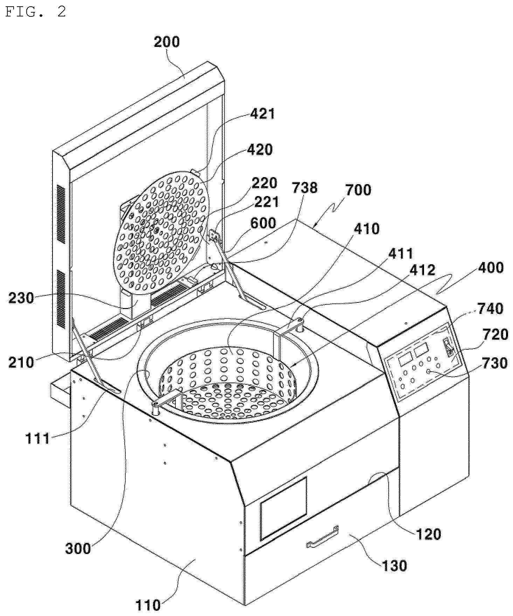

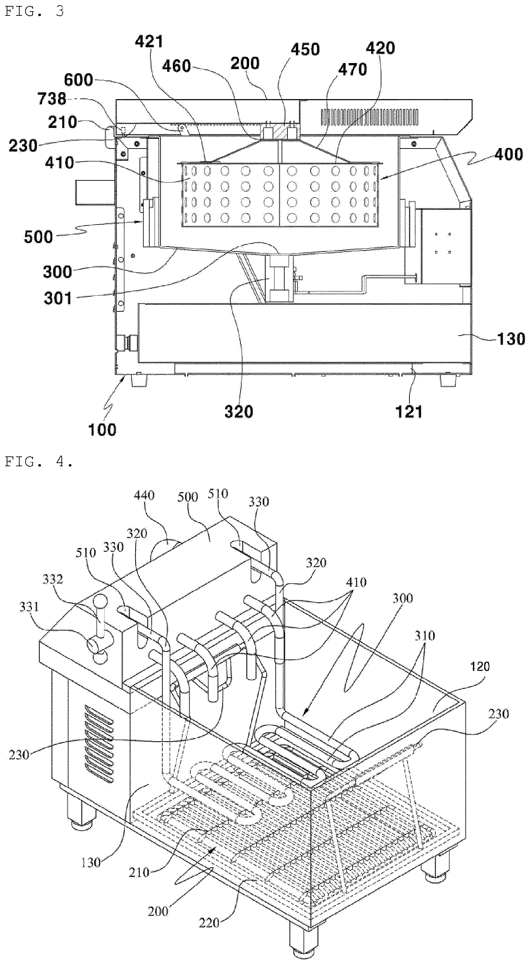

So as to solve the above-mentioned problems, an induction heating fryer using a high voltage is disclosed in Korean Patent No.10-1652023 (hereinafter, referred to as prior art 2). According to the prior art 2, the induction heating fryer includes an induction heating unit located on the outer peripheral surface of a frying container to convert electric energy into heat energy through the generation of eddy current and electromagnetic induction near the outer peripheral surface of the frying container. As shown in FIGS.2 and 3, the induction heating fryer using a high voltage according to the prior art 2 includes a case 100, a cover 200, a frying container 300, a frying basket 400, an induction heating unit 500, ascending/descending units 600, and a controller 700.

The case 100 includes a case body 110 open on top thereof and having a given space formed at the inside thereof, an oil collector 120 formed on the front surface of the case body 110 to discharge the frying oil filled in the frying container 300, and a collection drawer 130 drawably disposed in the oil collector 120 to receive the frying oil discharged from the oil collector 120.

Further, a plurality of guide rails 121 is disposed on the bottom of the oil collector 120 to minimize a frictional force generated at the time when the collection drawer 130 is inserted into and drawn from the oil collector 120.

The cover 200 is rotatably disposed on top of the case 100 by means of hinges 210 so that it is coupled to the ascending/descending units 600 in such a manner as to be operated cooperatively therewith to ascend and descend the frying basket 400. Further, the cover 200 has ' 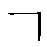 '-shaped connection members 220 disposed on the inner corners thereof and connection pieces 221 formed integrally with the connection members 220 in such a manner as to be coupled to the ascending/descending units 600, so that the cover 200 is open, it is cooperatively operated with the ascending/descending units 600 to ascend the frying basket 400.

The frying container 300 is disposed on the upper portion of the case 100 and has a given space formed at the inside thereof to contain the frying oil therein. Further, the frying container 300 has a discharge hole 301 formed on the inner bottom thereof and a discharge pipe 320 disposed on the discharge hole 301 and having a valve mounted thereon to selectively discharge the frying oil therethrough.

A valve lever is connected to the valve mounted on the discharge pipe 320 in such a manner as to be extended toward an auxiliary cover (having no reference numeral in the figures) disposed on the front surface of the case body 110, and accordingly, the opening and closing of the valve can be adjusted by a user.

The frying basket 400 is located inside the frying container 300 and has a cylindrical basket body 410 connected to the ascending/descending units 600 in such a manner as to be ascended and descended.

Further, a circular basket cover 420 is mounted on the underside of the cover 200 in such a manner as to be located on top of the frying basket 400 when coupled to the frying basket 400, and the basket cover 420 has a plurality of cover pieces 421 formed curvedly on the outer periphery thereof in such a manner as to come into close contact with the top periphery of the frying basket 400.

The induction heating unit 500 includes an insulation member located on the outer peripheral surface of the frying container 300 to convert electric energy into heat energy through electromagnetic induction near the outer peripheral surface of the frying container 300, a coil disposed on one surface of the insulation member to convert electric energy into heat energy through electromagnetic induction near the outer peripheral surface of the frying container 300, and a plurality of coil fixing bodies disposed on one surface of the coil to fix the coil to the outer peripheral surface of the frying container 300.

As mentioned above, the temperature of the frying oil is adjusted by means of the induction heating unit 500 located on the outer peripheral surface of the frying container 300 to convert electric energy into heat energy through the generation of eddy current and electromagnetic induction near the outer peripheral surface of the frying container 300.

As frying is repeatedly performed in the frying container 300, on the other hand, the frying oil in the frying container 300 becomes acidified. The acidification of the frying oil undesirably causes oil's specific bad smell to be generated from fried food, and after a given period of time or the number of times used of the frying oil passes, the frying oil is exchanged into new frying oil, or the frying remnants mixed with the frying oil have to be removed from the frying oil.

So as to exchange the frying oil in the frying container 300 into new frying oil, the valve of the discharge pipe 320 disposed on the inner bottom of the frying container 300 is open to discharge the frying oil from the frying container 300. After the frying oil is completely discharged from the frying container 300, the valve of the discharge pipe 320 is closed, and new frying oil is poured into the frying container 300.

So as to remove the frying remnants mixed with the frying oil, the valve of the discharge pipe 320 disposed on the inner bottom of the frying container 300 is open to transfer the frying oil to the collection drawer 130, and thus, the frying oil from the frying container 300 is completely discharged. After that, the frying oil in the collection drawer 130 passes through a net to remove the frying remnants from the frying oil, and the purified frying oil is poured into the frying container 300.

In the process for feeding the frying oil to the frying container 300, however, the frying oil contained in an oil container or the collection drawer 130 is poured into the open top portion of the frying container 300 through the user's hand, and accordingly, the frying oil may be spattered to the outside of the frying container 300 or it may be spilled by mistake.

So as to solve such problems, there is a need to perform the automation in the supply of the frying oil through a feed pipe adapted to feed the frying oil to the frying container 300.

A fryer having an oil purification function, which is capable of performing the automation in the supply of frying oil to a frying container, is disclosed in Korean Patent No.10-1594041 (hereinafter, referred to as prior art 3), which is shown in FIGS.4 and 5.

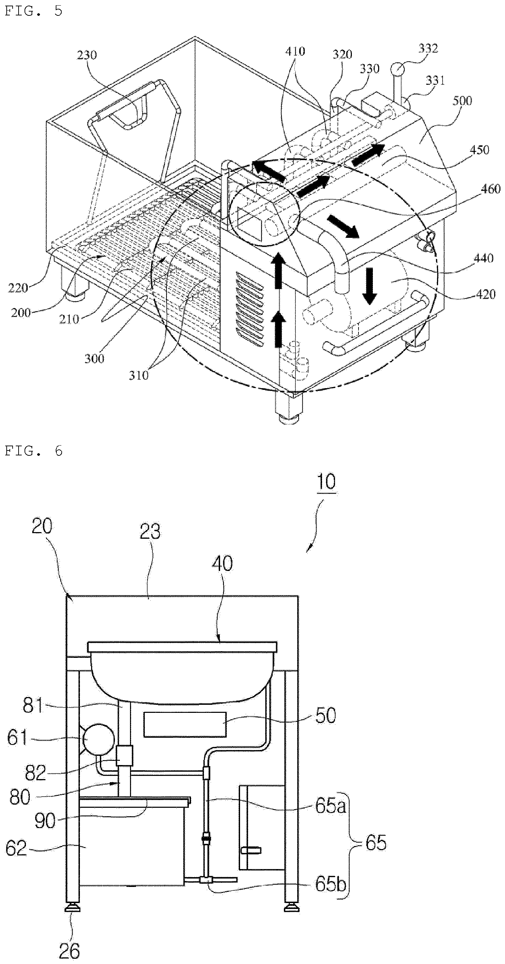

According to the prior art 3, as shown in FIGS.4 and 5, a fryer 100 has a tank body 120 adapted to contain frying oil therein and to heat or purify the frying oil contained therein. The frying and purification are performed through one tank body 120. The frying is performed in the tank body 120, and during the frying, the frying oil is purified and then moved to the interior of the tank body 120 again or to the outside.

To do this, a filtering unit 200 is disposed on the inner bottom of the tank body 120 or facingly disposed to the inner bottom of the tank body 120. The filtering unit 200 has a filtering member for filtering frying remnants from the frying oil in the tank body 120. In the figures, for example, the filtering unit 200 is disposed on the bottom of the tank body 120. A heating unit 300 is disposed inside the tank body 120 in such a manner as to be distinguished from the filtering unit 200. The heating unit 300 includes an electromagnetic induction heating unit or surface heater.

Further, the fryer includes a circulation flow path having one or more return tubes 410 adapted to feed the frying oil purified through the filtering unit 200 to the tank body 120. Furthermore, the frying oil moving along the circulation flow path is circulated to the tank body 120 by means of a pump 420.

On the other hand, a fryer having an automatic purification function, which feeds frying oil to a frying container through an oil re-feed unit disposed on one side surface of the frying container, is disclosed in Korean Patent No.10-1522812 (hereinafter, referred to as prior art 4), which is shown in FIGS.6 and 7.

According to the prior art 4, a fryer 10 having an automatic purification function includes a body 20 on which a controller (not shown) is mounted, a frying container 40 mounted on top of the body 20 to accommodate frying oil therein, a heater 50 adapted to heat the frying oil accommodated in the frying container 40, and purification means 60 mounted in the accommodation space of the body 20 to purify the frying oil transferred from the frying container 40 and then to re-feed the purified frying oil to the frying container 40 or to discharge the purified frying oil to the outside. The frying container 40 is open on top thereof and has an oil discharge hole 41 formed on the bottom thereof to transfer the frying oil accommodated therein to the purification means 60 and an oil re-feeder 42 formed on one side thereof to feed the frying oil supplied through the purification means 60 to the interior of the frying container 40.

An oil discharge unit 80, which is mounted on the lower periphery of the oil discharge hole 41, includes an oil discharge pipe 81 having a given length in such a manner as to be mounted vertically and an opening and closing valve 82 mounted on the oil discharge pipe 81.

The purification means 60 mounted in the accommodation space 22 of the body 20 purifies the frying oil of the frying container 40 fed to the oil discharge unit 80 connected to the oil discharge hole 41 of the frying container 40 and supplies the purified frying oil to the oil re-feeder 42 or discharges the purified frying oil to the outside.

That is, the oil discharge unit 80 serves to feed the frying oil transferred from the oil discharge hole 41 to the purification means 60 through the oil discharge pipe 81 according to the operation of the opening and closing valve 82.

The purification means 60 primarily purifies the frying oil fed from the oil discharge unit 80 by means of the filtering net of a purification tank 62, secondarily purifies the frying oil purified through the filtering net through a filter, and discharges the filtered frying oil to the oil re-feeder 42 or to the outside through a purified oil discharger 65 according to the operation of a pump 61.

However, undesirably, the electromagnetic induction heating fryer as disclosed in the prior art 2 does not have any function of automatically purifying the frying oil.

According to the prior art 3, further, the process for feeding the frying oil to the frying container is automated to prevent the frying oil from being spattered to the outside of the frying container or from being spilled by mistake, but there is a need to install a separate oil feed pipe above the frying container, thereby undesirably making the fryer complicated in configuration.

According to the prior art 4, on the other hand, the fryer has an automatic oil purification function, but the oil re-feeder is formed on the side periphery of the frying container, so that undesirably, it is difficult to locate a coil for electromagnetic induction heating on the side periphery of the frying container.

### DISCLOSURE OF INVENTION

### TECHNICAL PROBLEM

Accordingly, the present invention has been made in view of the above-mentioned problems occurring in the prior art, and it is an object of the present invention to provide an induction heating fryer that heats frying oil in a frying container by means of electromagnetic induction heating, is simple in configuration where the frying oil is fed to the frying container, and has an automatic oil purifying function.

### TECHNICAL SOLUTION

The object is solved by an induction heating fryer according to claim 1.

To accomplish the above-mentioned object, according to a first aspect of the present invention, there is provided an induction heating fryer including: a case; a cover unit disposed openably/closably on top of the case; a frying container disposed inside the case; a frying basket disposed inside the frying container; a basket cap disposed on the center of the underside of the cover unit to open and close the frying basket; and an induction heating unit disposed on the outer peripheral surface of the frying container, wherein a feed pipe is disposed on bodies of a discharge pipe disposed on the inner bottom of the frying container in such a manner as to protrude from the bodies in an upward direction from the ground so as to feed frying oil to the discharge pipe, and the discharge pipe has upper and lower panels downwardly inclinedly disposed into the bodies, one end of the upper panel being brought into close contact with the left side surface of the bodies and then mounted thereon, and one end of the lower panel being brought into close contact with the right side surface of the bodies under the upper panel and then mounted thereon, and a hole for connecting the feed pipe and the bodies with each other being formed on the right side of the bodies at a position higher than the lower portion of the upper panel.

According to the present invention, desirably, the induction heating fryer further includes: a frying oil collecting container for collecting the frying oil discharged from the discharge pipe; and a pump for supplying the frying oil in the frying oil collecting container to the feed pipe.

According to the present invention, desirably, the feed pipe has a check valve mounted thereon.

### ADVANTAGEOUS EFFECTS

According to the present invention, the induction heating fryer includes: the case; the cover unit disposed openably/closably on top of the case; the frying container disposed inside the case; the frying basket disposed inside the frying container; the basket cap disposed on the center of the underside of the cover unit to open and close the frying basket; and the induction heating unit disposed on the outer peripheral surface of the frying container, wherein the feed pipe is disposed on the discharge pipe mounted on the inner bottom of the frying container, so that when the frying oil is fed to the frying container, it is not spattered to the outside of the frying container or is not spilled by mistake.

According to the present invention, further, the feed pipe protrudes from the discharge pipe in the upward direction from the ground to prevent the frying remnants from being introduced thereinto.

According to the present invention, further, the feed pipe has the check valve mounted thereon to prevent the frying oil from flowing back from the frying container.

According to the present invention, further, the induction heating fryer further includes: the frying oil collecting container for collecting the frying oil discharged from the discharge pipe; and the pump for supplying the frying oil in the frying oil collecting container to the feed pipe, so that the pump is driven to automatically feed the frying oil from the frying oil collecting container to the feed pipe.

According to the present invention, further, the discharge pipe has the upper and lower panels downwardly inclinedly disposed into the bodies thereof to prevent the frying remnants collected toward the lower portion of the discharge pipe from the bottom of the frying container from being mixedly moved with the frying oil in the frying container.

### BRIEF DESCRIPTION OF THE DRAWINGS

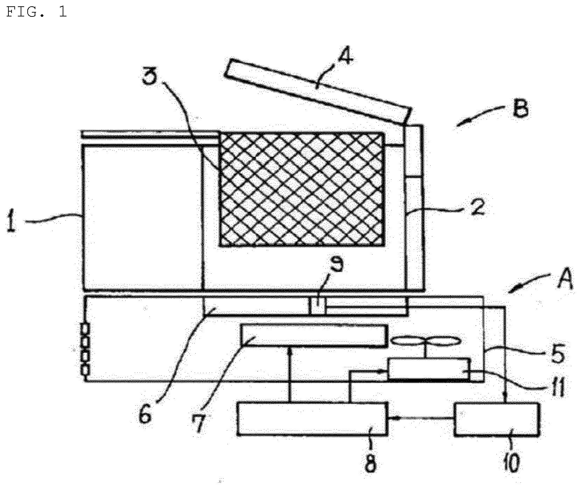

FIG.1 is a schematic view showing an electromagnetic induction heating fryer according to prior art 1.
FIG.2 is a perspective view showing an electromagnetic induction heating fryer according to prior art 2.
FIG.3 is a partial section side view showing the coupled state of the electromagnetic induction heating fryer of FIG.2.
FIG.4 is a perspective view showing an electromagnetic induction heating fryer according to prior art 3.
FIG.5 is a perspective view showing the electromagnetic induction heating fryer according to prior art 3, wherein oil moves along a circulation flow path.
FIG.6 is a side view showing an electromagnetic induction heating fryer according to prior art 4.

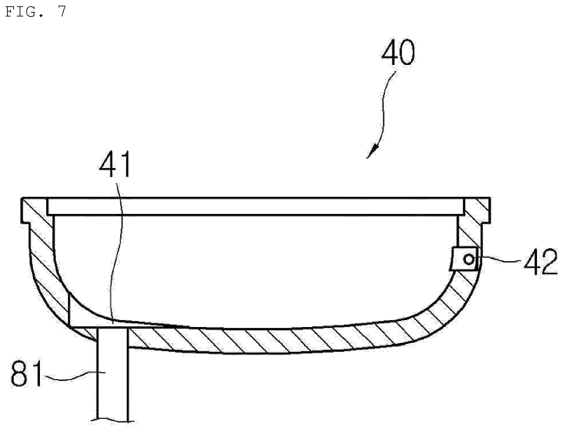

FIG.7 is an enlarged section view showing a portion of the electromagnetic induction heating fryer according to prior art 4.
FIG.8 is a perspective view showing an induction heating fryer according to a first embodiment of the present invention.
FIG.9 is an exploded perspective view showing the induction heating fryer according to the first embodiment of the present invention.
FIG.10 is an exploded perspective view showing a case of the induction heating fryer according to the first embodiment of the present invention.
FIG.11 is an exploded perspective view showing a cover unit of the induction heating fryer according to the first embodiment of the present invention.
FIG.12 is a perspective view showing a discharge pipe of the induction heating fryer according to the first embodiment of the present invention.
FIG.13 is an exploded perspective view showing the discharge pipe of the induction heating fryer according to the first embodiment of the present invention.
FIG.14 is a perspective view showing an induction heating fryer.
FIG.15 is an enlarged view showing a portion 'A' in the state where a valve opening and closing door of FIG.14 is open.
FIG.16 is an exploded perspective view showing the induction heating fryer of FIG.14 and 15.
FIG.17 is a perspective view showing an induction heating unit of FIG.16.

### BEST MODE FOR CARRYING OUT THE INVENTION

Hereinafter, an explanation on the present invention will be given in detail with reference to the attached drawings so as to allow the present invention to be obviously understood by one of ordinary skill in the art. Further, the present invention may be modified in various ways and may have several exemplary embodiments. Specific exemplary embodiments of the present invention are illustrated in the drawings and described in detail in the detailed description. However, this does not limit the invention within specific embodiments.

Now, a configuration of an induction heating fryer according to a first embodiment of the present invention will be in detail explained with reference to the attached drawings.

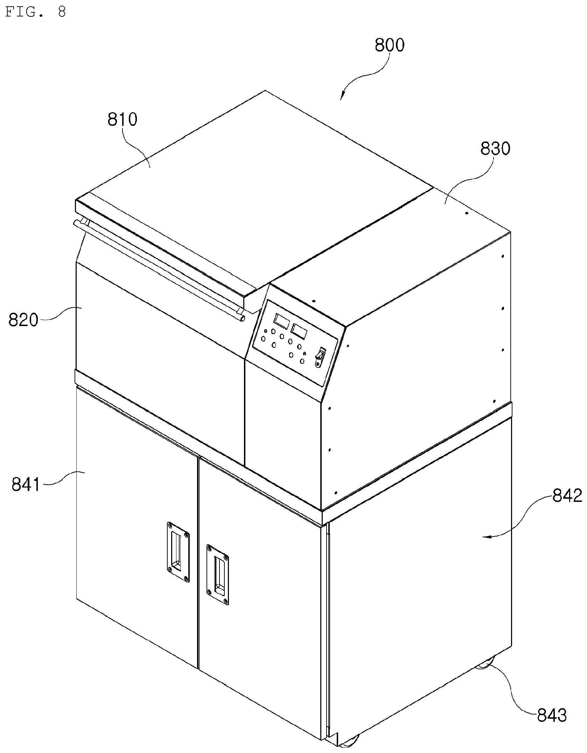

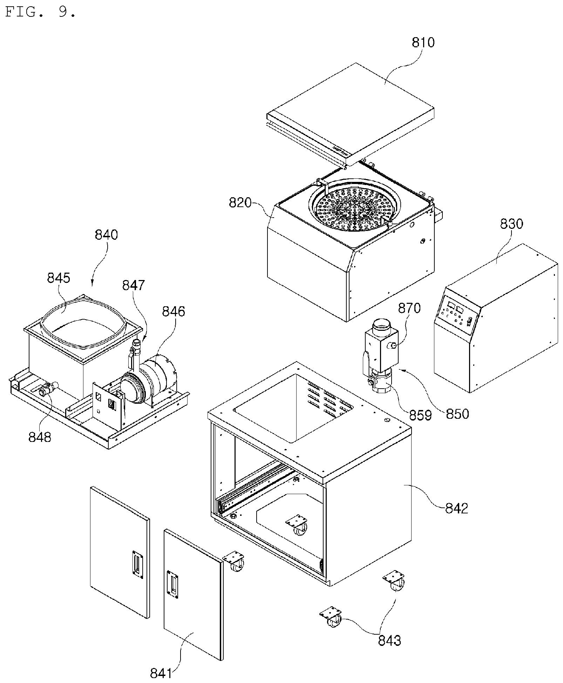

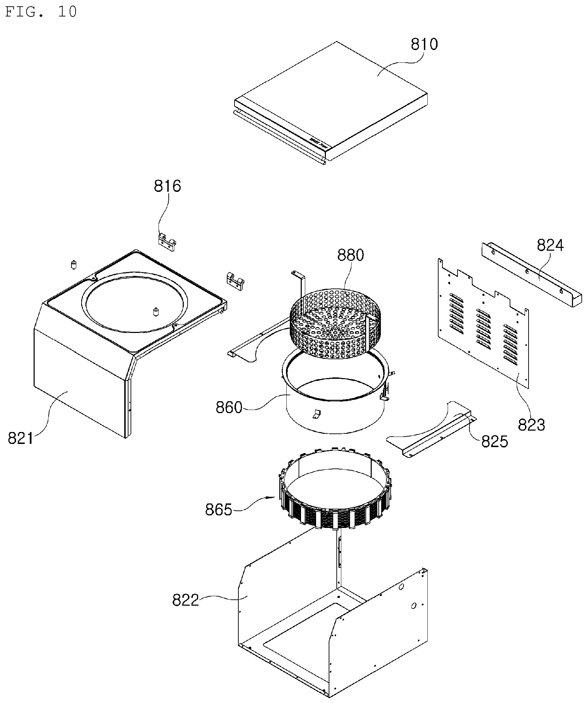

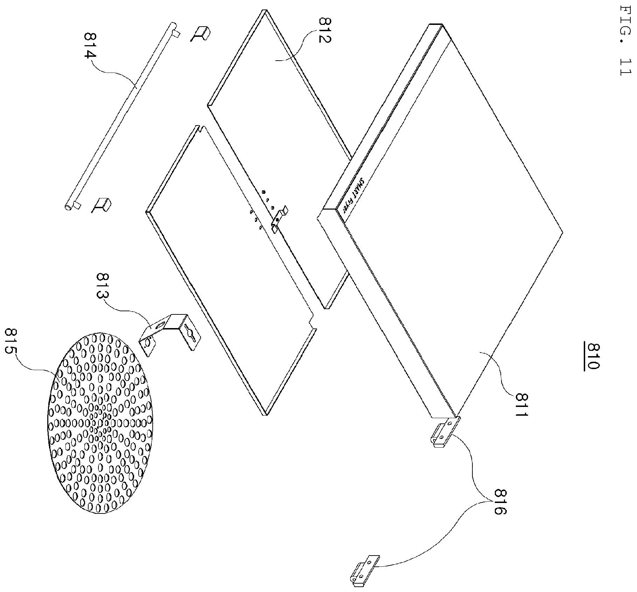

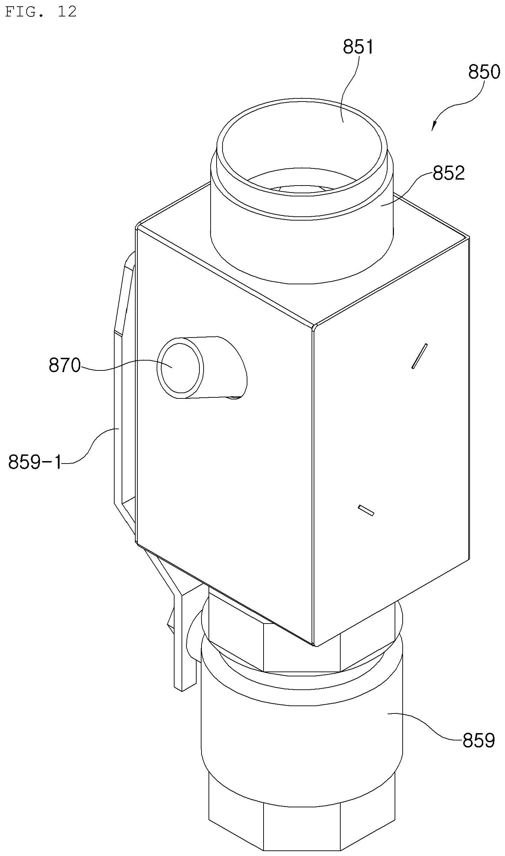

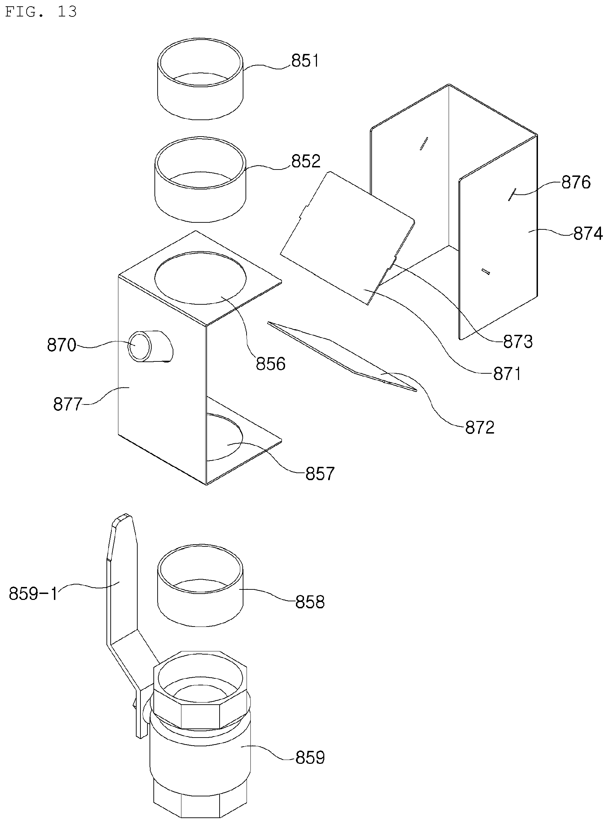

FIG.8 is a perspective view showing an induction heating fryer according to a first embodiment of the present invention, FIG.9 is an exploded perspective view showing the induction heating fryer according to the first embodiment of the present invention, FIG.10 is an exploded perspective view showing a case of the induction heating fryer according to the first embodiment of the present invention, FIG.11 is an exploded perspective view showing a cover unit of the induction heating fryer according to the first embodiment of the present invention, FIG.12 is a perspective view showing a discharge pipe of the induction heating fryer according to the first embodiment of the present invention, and FIG.13 is an exploded perspective view showing the discharge pipe of the induction heating fryer according to the first embodiment of the present invention.

An induction heating fryer according to a first embodiment of the present invention includes: a case 820; a cover unit 810 disposed openably/closably on top of the case 820; a frying container 860 disposed inside the case 820; a frying basket 880 disposed inside the frying container 860; a basket cap 815 disposed on the center of the underside of the cover unit 810 to open and close the frying basket 880; and an induction heating unit 865 disposed on the outer peripheral surface of the frying container 860. Further, the induction heating fryer includes a feed pipe 870 for feeding frying oil to a discharge pipe 850 disposed on the inner bottom of the frying container 860.

The case 820 has a given size according to the capacity of the induction heating fryer.

The case 820 includes a front-top plate 821, an underside-side plate 822, a rear plate 823, and two plates 825 for forming a mounting hole. The front-top plate 821 has a mounting hole formed on top thereof to mount the frying container 860 thereinto. The underside-side plate 822 has a square hole formed on underside thereof in such a manner as to communicate with an automatic purifying unit 840 located on the underside of the case 820. Further, the rear plate 823 is coupled to the front-top plate 821 and the underside-side plate 822 by means of fastening of bolts to bolt holes formed on the rear edge of the front-top plate 821 and the rear surfaces of the underside-side plate 822, and the rear plate 823 has a plurality of slots formed on the center thereof.

On the other hand, a frying oil drawer (not shown) is mounted on the rear plate 823 to draw the frying oil falling when the cover unit 810 is open, and the frying oil drawer is disposed on the rear plate 823 by means of a support bar 824.

The cover unit 810 is rotatably disposed on one side edge of the case 820 by means of hinges 816. As shown in FIG.11, the cover unit 810 includes a cover 811, cover lower plates 812, a handle 814 mounted on the front surface thereof, a cap fixing piece 813, and the basket cap 815. The basket cap 815 is fixed to the cover lower plates 812 by means of the cap fixing piece 813. The cover lower plates 812 are two connected to each other. The cap fixing piece 813 has an approximately ' 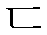 '-like shape and also has long slots formed on top thereof in such a manner as to insert bolts thereinto. The basket cap 815 is adjustable in fixed position by means of the slots formed on the cap fixing piece 813 in such a manner as to correspond to the top periphery of the frying basket 880. Further, the basket cap 815 and the frying basket 880 can come into close contact with each other by means of the elasticity of the cap fixing piece 813, without any gap.

The induction heating unit 865 is located on the outer peripheral surface of the frying container 860 to convert electric energy into heat energy through the generation of eddy current and electromagnetic induction near the outer peripheral surface of the frying container 860.

A temperature sensor (not shown) is located on one side of the frying container 860 to measure a temperature of the frying oil in the frying container 860.

The discharge pipe 850 is disposed on the inner bottom of the frying container 860. The inner bottom of the frying container 860 is inclinedly formed toward the center thereof to collect frying remnants to the center at which the discharge pipe 850 is located, and the frying container 860 has a hole (not shown) formed at the center thereof in such a manner as to communicate with the discharge pipe 850.

As shown in FIGS.12 and 13, the discharge pipe 850 includes an inner pipe 851 connected to the hole formed on the inner bottom of the frying container 860, a first outer pipe 852 adapted to surround the outer peripheral surface of the inner pipe 851, bodies 874 and 877 connected to the lower end periphery of the first outer pipe 852 in such a manner as to communicate with the first outer pipe 852, a second outer pipe 858 adapted to communicate with the lower portions of the bodies 874 and 877, a valve 859 connected to the second outer pipe 858, and the feed pipe 870 located on one side of the bodies 874 and 877. A reference numeral 856 indicates a hole formed on top of the body 877 in such a manner as to communicate with the lower periphery of the first outer pipe 852, and a reference numeral 857 indicates a hole formed on underside of the body 877 in such a manner as to communicate with the upper periphery of the second outer pipe 858.

The bodies 874 and 877 have a shape of a rectangular parallelepiped, but they may have a shape of a cylinder.

Further, the discharge pipe 850 has at least one or more upper and lower panels 871 and 872 downwardly inclinedly disposed inside the bodies 874 and 877.

The upper and lower panels 871 and 872 are weldedly inserted into slots 876 formed on the side surfaces of the bodies 874 and 877, and they have protrusions 873 formed on both sides thereof. The upper and lower panels 871 and 872 are weldedly inserted into the slots 876 of the bodies 874 and 877 to prevent the frying oil in the discharge pipe 850 from leaking to the outside. Further, one end of the upper panel 871 comes into close contact with the left side surface of the bodies 874 and 877 and is then inclinedly mounted thereon. One end of the lower panel 872 comes into close contact with the right side surface of the bodies 874 and 877 under the upper panel 871 and is then inclinedly mounted thereon.

A hole for connecting the feed pipe 870 and the bodies 874 and 877 with each other is formed on the right side of the bodies 874 and 877 at a position higher than the lower portion of the upper panel 871.

The feed pipe 870 protrudes from the side of the bodies 874 and 877 of the discharge pipe 850 in an upward direction from the ground, so that the frying remnants left in the bodies 874 and 877 are not introduced into the feed pipe 870. Desirably, the feed pipe 870 has an angle of 10° or more in the upward direction from the ground. Further, the feed pipe 870 has a check valve (not shown) mounted thereon. Accordingly, the backflow of the frying oil from the frying container 860 through the feed pipe 870 can be prevented.

According to the present invention, the automatic oil purifying unit 840 includes a frying oil collecting container 845 for collecting the frying oil discharged from the discharge pipe 850 and a pump 846 for feeding the frying oil in the frying oil collecting container 845 to the feed pipe 875. According to the present invention, the frying oil in the frying oil collecting container 845 can be automatically fed to the feed pipe 875 by means of the operation of the pump 846. The pump 846 has an introduction pipe (not shown) connected to the frying oil collecting container 845 and a discharge port formed thereon. Further, a valve 847 is mounted on the discharge port of the pump 846 to block the frying oil discharged from the pump 846.

Further, the automatic oil purifying unit 840 includes an oil purifying case 842 having a shape of a rectangular parallelepiped, a front opening and closing door 841 mounted on the front of the oil purifying case 842, and casters 843 located on the underside of the oil purifying case 842. The frying oil collecting container 845 and the pump 846 are mounted on rails of the oil purifying case 842, and if necessary, they are drawn from the oil purifying case 842 after the front opening and closing door 841 is open. If the automatic oil purifying unit 840 is not used for a while, further, the oil purifying case 842 in which the automatic oil purifying unit 840 is mounted moves through the casters 843 attached to the underside thereof in such a manner as to be separated from the case 820 and then kept separately in a given place.

According to the present invention, the frying oil collecting container 845 and the pump 846 of the automatic oil purifying unit 840 are mounted in the oil purifying case 842, but if necessary, they can be separably disposed from the oil purifying case 842. Accordingly, the automatic oil purifying unit used before can be put by a user into the oil purifying case 842 in such a manner as to be connected to the feed pipe 870 and the discharge pipe 850.

Moreover, a method for purifying the frying remnants in the frying oil collecting container 845 is carried out by means of various known technologies, and for example, a net (not shown) may be located on an open top portion of the frying oil collecting container 845 to filter the frying remnants therethrough.

As shown in FIG.8, a control unit 830 is separably mounted from the case 820 on top of the oil purifying case 842. The control unit 830 includes a control box disposed on one side of the case 820 to have a given space formed at the inside thereof and adapted to control the operation of the induction heating fryer, a control panel disposed on the front surface of the control box and having a plurality of buttons to control the induction heating unit 865, and a control board disposed on the back surface of the control panel and having a power control circuit, a frying temperature setting circuit, a frying time setting circuit, a circuit for generating and blocking eddy current from the induction heating unit 865, and a micro controller unit MCU. The control panel has a display for indicating temperature, time, and operating states by characters, so that the induction heating fryer can be controlled through the buttons pressed by the user.

Further, the automatic oil purifying unit 840 can be controlled by means of the control panel. For example, the driving of the pump 846 and stopping the driving can be controlled by means of the control panel.

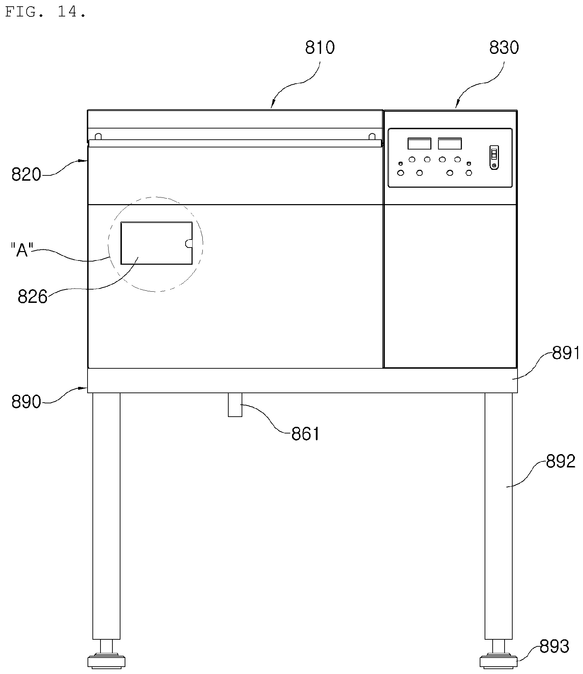

The induction heating fryer according to the first embodiment of the present invention is not limited to that as shown in FIGS.8 to 13, but it can be differently configured as shown in FIGS.14 to 16.

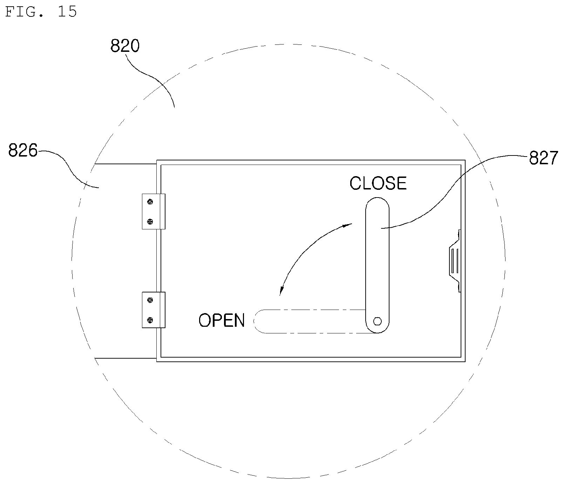

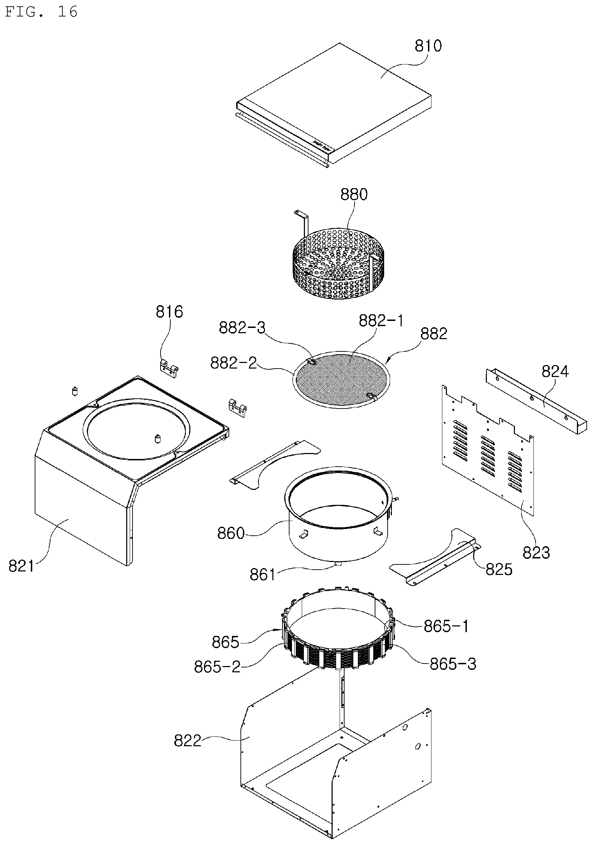

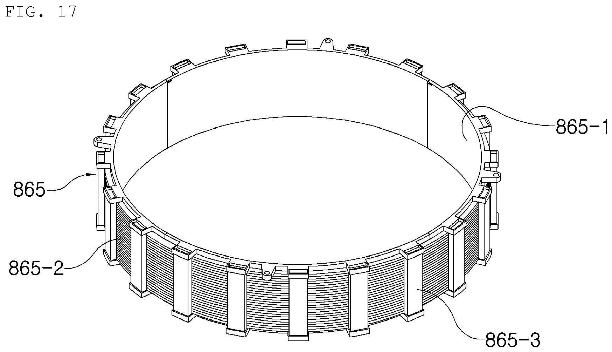

FIG.14 is a perspective view showing an induction heating fryer, FIG.15 is an enlarged view showing a portion 'A' in the state where a valve opening and closing door of FIG.14 is open, FIG.16 is an enlarged perspective view showing the induction heating fryer of FIG.14 and 15, and FIG.17 is a perspective view showing an induction heating unit of FIG.16.

Referring to FIGS.14 to 17, an induction heating fryer includes: a case 820; a cover unit 810 disposed openably/closably on top of the case 820; a frying container 860 disposed inside the case 820; a frying basket 880 disposed inside the frying container 860; a fine remanant filtering net 882 disposed inside the frying container 860 in such a manner as to be located under the frying basket 880; a basket cap 815 disposed on the center of the underside of the cover unit 810 to open and close the frying basket 880; and an induction heating unit 865 disposed on the outer peripheral surface of the frying container 860. Further, the induction heating fryer includes an oil discharge pipe 861 disposed on the inner bottom of the frying container 860, a valve (not shown) mounted on the oil discharge pipe 861, and a support 890 located on the underside of the case 820.

The configuration of the cover unit 810 is the same as shown in FIG.11, and accordingly, an explanation on such configuration will be avoided for the brevity of the description.

The case 820 has a given size according to the capacity of the induction heating fryer.

The case 820 includes a front-top plate 821, an underside-side plate 822, a rear plate 823, and two plates 825 for forming a mounting hole. The front-top plate 821 has a mounting hole formed on top thereof to mount the frying container 860 thereinto. The underside-side plate 622 has a square hole formed on underside thereof.

Further, the rear plate 823 is coupled to the the front-top plate 821 and the underside-side plate 822 by means of fastening of bolts to bolt holes formed on the rear edge of the front-top plate 821 and the rear surfaces of the underside-side plate 822, and the rear plate 823 has a plurality of slots formed on the center thereof.

Also, the case 820 has a valve opening and closing door 826 disposed openably and closably on the front surface thereof and a lever 827 disposed inside the valve opening and closing door 826 to control the opening and closing of the valve.

As shown in FIG.15, the lever 827 rotates around one side thereof to operate the valve mounted on the oil discharge pipe 861, thereby controlling the discharging of the frying oil.

The fine remnant filtering net 882 has a larger size than the frying basket 880 and is located between the frying container 860 and the frying basket 880 to filter the frying remnants therethrough, thereby minimizing the acidification of the frying oil.

Further, the fine remnant filtering net 882 includes a fine net 882-1 for filtering small to large frying remnants, a peripheral edge 882-2 disposed on the outer periphery of the net 882-1, and net handles 882-3 disposed on the peripheral edge 882-2 in such a manner as to be drawn from the frying container 860 by a user.

The induction heating unit 865 includes a bracket 865-1 disposed on the outer peripheral surface of the frying container 860 and having a plurality of pieces coupled to each other to the form of a circle, each piece having magnet fixing protrusions (having no reference numeral in the figures), a coil 865-2 wound along the outer periphery of the bracket 865-1, and a plurality of magnets 865-3 disposed on the magnet fixing protrusions in such a manner as to be located at the outside of the coil 865-2. The induction heating unit 865 is located on the outer peripheral surface of the frying container 860 to convert electric energy into heat energy through the generation of eddy current and electromagnetic induction near the outer peripheral surface of the frying container 860.

A temperature sensor (not shown) is located on one side of the frying container 860 to measure a temperature of the frying oil in the frying container 860.

The oil discharge pipe 861 is disposed on the inner bottom of the frying container 860, and the lever 827 is disposed on the oil discharge pipe 861 to operate the valve mounted on the oil discharge pipe 861, thereby selectively discharging the frying oil by the user.

The support 890 includes a flat support panel 891 adapted to locate the case 820 thereon, a plurality of legs 892 mounted on the underside of the support panel 891 in such a manner as to allow the case 820 to be located to a given height, and height adjusting members 893 disposed on the undersides of the legs 892 in such a manner as to allow the case 820 to be located horizontally.

Hereinafter, a method for operating the induction heating fryer according to the first embodiment of the present invention will be explained with reference to FIGS.8 to 13.

After the valve 859 of the discharge pipe 850 is closed, first, the frying oil is poured into the frying container 860.

After that, food is fried for a given period of time, and next, the frying oil should be exchanged or purified.

If the valve 859 is open to exchange or purify the frying oil, the frying oil filled in the frying container 860 and the frying remnants collected in the discharge pipe 850 are discharged to the frying oil collecting container 845 through the discharge pipe 850.

So as to exchange the frying oil into new oil, the front opening and closing door 841 is open, and next, the frying oil collecting container 845 mounted along the rails of the oil purifying case 842 is drawn forwardly from the oil purifying case 842. In this state, the frying oil is exchanged into new oil.

So as to feed the frying oil from which the frying remnants are removed by the net mounted inside the oil collecting container 845 to the frying container 860, on the other hand, the valve 859 is closed, and after that, the pump 846 is driven. The purified frying oil in the oil collecting container 845 passes through the introduction pipe, the pump 846, and a discharge pipe and is then supplied to the feed pipe 870 through a flexible hose (not shown). The frying oil supplied to the feed pipe 870 is introduced into the frying container 860 through the discharge pipe 850 and the hole formed on the inner bottom of the frying container 860.

According to the present invention, therefore, the induction heating unit 865 is disposed on the outer peripheral surface of the frying container 860, and it is convenient to feed the frying oil through the feed pipe 870 disposed on one side of the discharge pipe 850 and the pump 846. Further, advantageously, it is easy to heat the frying oil by means of electromagnetic induction heating, the configuration where the frying oil is fed to the frying container 860 is simple, and the automatic oil purifying function is provided.

While the present invention has been described with reference to the particular illustrative embodiments, it is not to be restricted by the embodiments but only by the appended claims. It is to be appreciated that those skilled in the art can change or modify the embodiments without departing from the scope of the present invention.

### INDUSTRIAL APPLICABILITY

The present invention is applicable to an induction heating fryer capable of heating frying oil in a frying container by means of electromagnetic induction heating.

## Claims

1. An induction heating fryer comprising: a case (820); a cover unit (810) disposed openably/closably on top of the case (820); a frying container (860) disposed inside the case (820); a frying basket (880) disposed inside the frying container (860); a basket cap (815) disposed on the center of the underside of the cover unit (810) to open and close the frying basket (880); and an induction heating unit (865) disposed on the outer peripheral surface of the frying container (860), **characterized in that** a feed pipe (870) is disposed on bodies (874 and 877) of a discharge pipe (850) disposed on the inner bottom of the frying container (860) in such a manner as to protrude from the bodies (874 and 877) in an upward direction from the ground so as to feed frying oil to the discharge pipe (850), and the discharge pipe (850) has upper and lower panels (871 and 872) downwardly inclinedly disposed into the bodies (874 and 877), one end of the upper panel (871) being brought into close contact with the left side surface of the bodies (874 and 877) and then mounted thereon, and one end of the lower panel (872) being brought into close contact with the right side surface of the bodies (874 and 877) under the upper panel (871) and then mounted thereon, and a hole for connecting the feed pipe (870) and the bodies (874 and 877) with each other being formed on the right side of the bodies (874 and 877) at a position higher than the lower portion of the upper panel (871).

2. The induction heating fryer according to claim 1, further comprising: a frying oil collecting container (845) for collecting the frying oil discharged from the discharge pipe (850); and a pump (846) for supplying the frying oil in the frying oil collecting container (845) to the feed pipe (870).

3. The induction heating fryer according to claim 1, wherein the feed pipe (870) has a check valve mounted thereon.

## Patentansprüche

1. Induktionsheizfritteuse aufweisend: ein Gehäuse (820); eine Abdeckeinheit (810), die zu öffnen/zu schließen oben an dem Gehäuse (820) angeordnet ist; einen Frittierbehälter (860), der im Gehäuse (820) angeordnet ist; einen Frittierkorb (880), der in dem Frittierbehälter (860) angeordnet ist; eine Korbkappe (815), die an der Mitte der Unterseite der Abdeckeinheit (810) angeordnet ist, um den Frittierkorb (880) zu öffnen und zu schließen; und eine Induktionsheizeinheit (865), die an der Außenumfangsfläche des Frittierbehälters (860) angeordnet ist, **dadurch gekennzeichnet, dass** eine Zuführleitung (870) an Körpern (874 und 877) einer Auslassleitung (850) angeordnet ist, die an dem inneren Boden des Frittierbehälters (860) derart angeordnet ist, dass sie von den Körpern (874 und 877) in einer Richtung nach oben von dem Grund wegragt, um Frittieröl zu der Auslassleitung (850) zuzuführen, und die Auslassleitung (850) einen oberen und einen unteren Schirm (871 und 872) hat, die nach unten geneigt in den Körpern (874 und 877) angeordnet sind, wobei ein Ende des oberen Schirms (871) in engem Kontakt mit der linken Seitenfläche der Körper (874) und (877) gebracht und dann daran angebracht wird, und ein Ende des unteren Schirms (872) ist in engem Kontakt mit der rechten Seitenfläche der Körper (874) und (877) unter dem oberen Schirm (871) gebracht und dann daran angebracht, und ein Loch zur Verbindung der Zuführleitung (870) und der Körper (874 und 877) miteinander ist in der rechten Seite der Körper (874 und 877) an einer Position eingebracht, die höher ist als der untere Abschnitt des oberen Schirms (871).

2. Induktionsheizfritteuse nach Anspruch 1, außerdem aufweisend; einen Frittierölsammelbehälter (845) zum Sammeln des Frittieröls, das von der Auslassleitung (850) abgelassen wird; und eine Pumpe (846) zum Zuführen des Frittieröls im Frittierölsammelbehälter (845) zur Zuführleitung (870).

3. Induktionsheizfritteuse nach Anspruch 1, wobei die Zuführleitung (870) ein daran angebrachtes Sperrventil hat.

## Revendications

1. Friteuse à chauffage par induction comprenant : un boîtier (820) ; une unité de couvercle (810) disposée de manière à pouvoir être ouverte/fermée sur le dessus du boîtier (820) ; une cuve à friture (860) disposée à l'intérieur du boîtier (820) ; un panier à friture (880) disposé à l'intérieur de la cuve à friture (860) ; un chapeau de panier (815) disposé sur le centre du dessous de l'unité de couvercle (810) pour ouvrir et fermer le panier à friture (880) ; et une unité de chauffage par induction (865) disposée sur la surface périphérique extérieure de la cuve à friture (860), **caractérisée en ce qu'**un tuyau d'alimentation (870) est disposé sur des corps (874 et 877) d'un tuyau de vidange (850) disposé sur le fond intérieur de la cuve à friture (860) de manière à faire saillie des corps (874 et 877) dans une direction montante par rapport au sol de façon à introduire de l'huile de friture dans le tuyau de vidange (850), et le tuyau de vidange (850) comporte des pans supérieur et inférieur (871 et 872) disposés inclinés vers le bas dans les corps (874 et 877), une extrémité du pan supérieur (871) étant amenée en contact serré avec la surface latérale gauche des corps (874 et 877) et ensuite montée dessus, et une extrémité du pan inférieur (872) étant amenée en contact serré avec la surface latérale droite des corps (874 et 877) sous le pan supérieur (871) et ensuite montée dessus, et un trou servant à raccorder entre eux le tuyau d'alimentation (870) et les corps (874 et 877) étant formé sur le côté droit des corps (874 et 877) au niveau d'une position plus haute que la partie inférieure du pan supérieur (871).

2. Friteuse à chauffage par induction selon la revendication 1, comprenant en outre : un bac de récupération d'huile de friture (845) pour récupérer l'huile de friture évacuée par le tuyau de vidange (850) ; et une pompe (846) pour fournir l'huile de friture présente dans le bac de récupération d'huile de friture (845) au tuyau d'alimentation (870).

3. Friteuse à chauffage par induction selon la revendication 1, dans laquelle le tuyau d'alimentation (870) comporte un clapet antiretour monté sur celui-ci.
